# EUROPEAN PATENT SPECIFICATION

(11) **EP 1 877 313 B1**
(45) Date of publication and mention of the grant of the patent: **27.07.2011**
(21) Application number: 06750151.0
(22) Date of filing: 13.04.2006
(51) Int. Cl.: B65B 25/00, B65B 55/24

(54) **METHODS AND APPARATUSES FOR SEALING OPHTHALMIC LENS PACKAGES**
VERFAHREN UND VORRICHTUNGEN ZUM VERSIEGELN VON PACKUNGEN MIT OPHTHALMISCHEN LINSEN
PROCEDES ET DISPOSITIFS POUR REFERMER DES EMBALLAGES DE LENTILLES OPHTALMIQUES

(30) Priority: 15.04.2005 US 672192 P
(43) Date of publication of application: 16.01.2008
(73) Proprietor: Johnson and Johnson Vision Care, Inc., Jacksonville, FL 32256 (US)
(72) Inventor: KERNICK, Edward R., Jacksonville, FL 32223 (US); LEWIS, Alan, Jacksonville, FL 32257 (US); HOOD, Charles, Jacksonville, FL 32259 (US); DARABY, Anthony, Ponte Vedra Beach, FL 32082 (US); BENJAMIN, Steve, Green Cove Springs, FL 32043 (US); PRICE, Melvin, Jacksonville, FL 32223 (US)
(74) Representative: Tunstall, Christopher Stephen
(86) International application number: PCT/US2006/014039
(87) International publication number: WO 2006/113417

(56) References cited:
- WO-A-98/32587
- WO-A-2005/001356
- US-A- 5 195 294
- US-A- 6 082 533
- US-A1- 2004 112 008

## Description

This invention related to apparatuses used for the treatment of ophthalmic lens packages prior to sealing those packages.

### BACKGROUND

Contact lenses have been used commercially to improve vision since the 1950s. The first contact lenses were made of hard materials, glass and hard plastics. Later developments in the field gave rise to soft contact lenses, based upon hydrogels, which are extremely popular today. The ophthalmic lenses are often packaged in individual packages, commonly known as blister packs. Typical blister packs consist of a plastic bowl that is covered with a laminate foil to contain the lens. See, U.S. Pat. Nos. D458,023; 5,467,868; and 5,656,362 all of which are hereby incorporated by reference in their entirety. Due to the comfort and popularity of these lenses, which are manufactured on a large scale by automated processes that include sealing ophthalmic lenses in a primary package and sterilizing those lenses. See, U.S. Pat. Nos. 6,054,090; 6,018,931; 5,696,686; 5,577,367; 5,488,815, and US Pat. App. Nos. 2004/0112008, 2005/0013729 all of which are hereby incorporated by reference in their entirety.

Even though theses methods are useful, problems can occur with the hermetic sealing of an ophthalmic lens in its blister pack under certain conditions. For example when ophthalmic lenses are packaged with aqueous solutions and heated to an elevated temperature in order to sterilize the package, steam is formed. This steam may interfere with the hermetic sealing of the blister to the laminate foil and form channels of unsealed areas or wrinkles in the laminated foil. Both of these conditions are undesirable in a product that must be delivered to consumer or an eye-care practitioner for ultimate use in an eye. This problem is heightened when the aqueous solution is in contact with the areas of the package that forms the hermetic seal between the plastic bowl and its cover. Such poorly sealed packages are typically discarded and lenses that are otherwise useable will be discarded. International patent publication no. WO 2005/001356 discloses an apparatus and method for drying the seal area of a contact lens blister package prior to affixing a lidstock to the seal area includes a vacuum block to which one or more vacuum heads are removably mounted. The vacuum heads include vacuum tips which engage and circumscribe the seal area removing moisture therefrom. Should a vacuum head become damaged, it is quickly and easily replaceable upon the vacuum block. Therefore it would be useful to find methods of preventing poorly sealed packages in a manufacturing environment. This need is met by the following invention.

### BRIEF DESCRIPTION OF THE DRAWINGS

- Fig. 1: Illustrates an ophthalmic lens package
- Fig. 2: Illustrate a member of the invention attached to a support
- Fig. 3: Illustrates an image of a contact lens manufacturing line
- Fig 4: Illustrates a perspective view of a member of the invention

### DETAILED DESCRIPTION OF THE INVENTION

This invention includes a method of treating an ophthalmic lens package containing an ophthalmic lens and a packaging liquid prior to sealing said package with a cover comprising, consisting essentially of, or consisting of removing said packaging liquid from the sealing portion of said package. As used herein "ophthalmic lens" refers to a device that resides in or on the eye. These devices can provide optical correction or may be cosmetic. The term ophthalmic lens includes but is not limited to soft contact lenses, intraocular lenses, overlay lenses, ocular inserts, and optical inserts. Preferred lenses of the invention are soft contact lenses are made from silicone elastomers or hydrogels, which include but are not limited to silicone hydrogels, and fluorohydrogels. Soft contact lens formulations are disclosed in US Patent No. 5,710,302, WO 9421698, EP 406161, JP 2000016905, U.S. Pat. No. 5,998,498, US Pat. App. No. 09/532,943, U.S. Patent No. 6,087,415, U.S. Pat. No. 5,760,100, U.S. Pat. No.5,776, 999, U.S. Pat. No. 5,789,461, U.S. Pat. No. 5,849,811, U.S. Pat. No. 5,965,631, and silicone hydrogels as prepared in U.S. Pat. No. 5,998,498, US Pat. App. No. 09/532,943, a continuation-in-part of US Pat App. No. 09/532,943, filed on August 30, 2000, U.S. Pat. App. No. 60/318,536, entitled Biomedical Devices Containing Internal wetting Agents," filed on September 10, 2001 and its non-provisional counterpart of the same title, U.S. Serial No. 10/236,538, filed on September 6, 2002, U.S. Patent No. 6,087,415, U.S. Pat. No. 5,760,100, U.S. Pat. No.5,776, 999, U.S. Pat. No. 5,789,461, U.S. Pat. No. 5,849,811, and U.S. Pat. No. 5,965,631. These patents and patent applications as well as all other patents and patent applications disclosed in this application are hereby incorporated by reference in their entirety. The particularly preferred lenses of the inventions are etafilcon A, galifilcon A, senofilcon A, lenefilcon A, lotrfilcon A, lotrifilcon B, balifilcon A, polymacon, genfilcon A, lenefilcon A, bafilcon, acofilcon A acquafilcon A, alofilcon A alphafilcon A, amifilcon A, astifilcon A, atalafilcon A, bisfilcon A bufilcon A, crofilcon A, cyclofilcon A, darfilcon A deltafilcon A, deltafilcon B, dimefilcon A, drooxifilcon A, epsifilcon A, esterifilcon A, focofilcon A, galyfilcon A, govafilcon A, hefilcon A hefilcon B, hefilcon D, hilafilcon A, hilafilcon B, hixoifilcon A, hioxifilcon B, hioxifilcon C, hydrofilcon A, licryfilcon A, licryfilcon B, lidofilcon B, lidofilcon A, mafilcon A, mesifilcon A, methafilcon B, mipafilcon A, nelfilcon A, netrafilcon A, ocufilcon A, ocufilcon B, ocufilcon C, ocufilcon D, ocufilcon E, ofilcon A, omafilcon A, oxyfilcon A, pentafilcon A, perfilcon A, pevafilcon A, phemfilcon A, , silafilcon A, siloxyfilcon A, tefilcon A, tetrafilcon A, trifilcon A, vifilcon A,or xylofilcon A. More particularly preferred lenses of the invention are etafilcon A, genfilcon A, galifilcon A, senofilcon A, lenefilcon A, lotrfilcon A, lotrifilcon B, and balifilcon A. The most particularly preferred lenses are galifilcon A and senofilcon A.

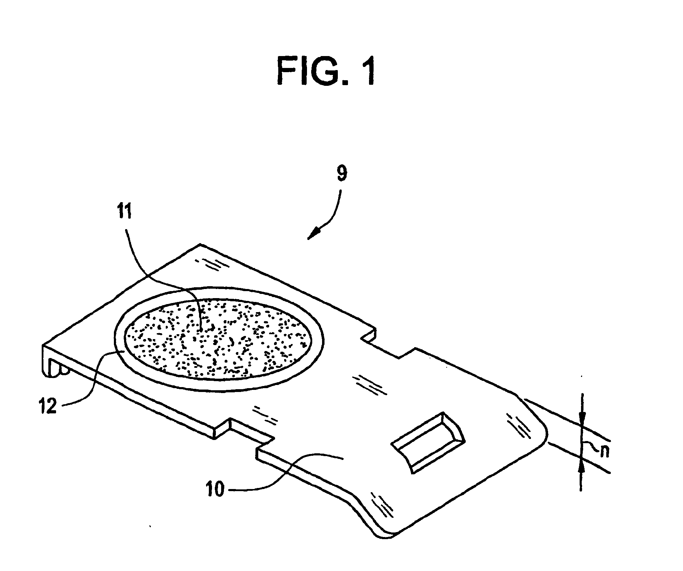

As used herein, "ophthalmic lens package" refers to any receptacle that houses an ophthalmic lens and a packaging liquid. The preferred ophthalmic lens package is the hard or plastic portion of a blister package. See, U.S. Patent Nos. 4,691,820; 5,054,610; 5,337,888; 5,375,698; 5,409,104; 5,467,868; 5,515,964; 5,609,246; 5,695,049; 5,704,468; 5,711,416; 5,722,536; 5,573,108; 5,823,327; 5,704,468; 5,983,608; 6,029,808; 6,044,966; and 6,401,915 for examples of such packaging, all of which are hereby incorporated by reference in their entirety. One example of an ophthalmic lens package is illustrated in **Fig. 1**. Such ophthalmic lens packaging **9**, typically has a substantially planar first surface **10** and a cavity **11** for holding the lens and the liquid. The particularly preferred ophthalmic lens packaging is made of polypropylene. The "sealing portion" of the ophthalmic lens package is the area that is hermetically sealed to the cover. Typically the hermetic seal is formed by a process that heat seals the cover to the sealing portion. Sealing portions may be any area on the substantially planar first surface **10**. Preferably the sealing portion **12**, is a raised above the substantially planar first surface and circumferentially surrounds the cavity **11**. As used herein "cover" refers to flexible materials that may be hermetically sealed to the ophthalmic lens package. The preferred cover is a flexible laminate made of aluminum sandwiched between one or more polymers. See U.S. Pat. Nos. 6,054,090 and 5,467,868, which are hereby incorporated by reference in their entirety.

As used herein, "packaging liquid" refers to solutions that are used to wash, swell, store, sterilize, or hydrate ophthalmic lenses. Examples of liquids include but are not limited to water, deionized water, organic solutions, aqueous salt solutions, alcohols such as methanol, ethanol, isopropanol, t-amyl alcohol, methylene chloride, hexane, and diluents that are used in the production of ophthalmic lenses. Preferred diluents include organic solvents, water or mixtures hereof. Preferred organic solvents include alcohols, methylene chloride, hexanes, diols, triols, polyols and polyalkylene glycols. Examples include but are not limited to glycerin, diols such as ethylene glycol or diethylene glycol; boric acid esters of polyols such as those described in US Patents 4,680,336; 4,889,664 and 5,039,459; polyvinylpyrrolidone; ethoxylated alkyl glucoside; ethoxylated bisphenol A; polyethylene glycol; mixtures of propoxylated and ethoxylated alkyl glucoside; single phase mixture of ethoxylated or propoxylated alkyl glucoside and C₂₋₁₂ dihydric alcohol; adducts of ε-caprolactone and C₂₋₆ alkanediols and triols; ethoxylated C₃₋₆ alkanetriol; and mixtures of these as described in U.S. Pat. Nos. 5.457,140; 5,490,059, 5,490,960; 5,498,379; 5,594,043; 5,684,058; 5,736,409; 5,910,519, all of the aforementioned patents are hereby incorporated by reference in their entirety. Diluents can also be selected from the group having a combination of a defined viscosity and Hanson cohesion parameter as described in U.S. Pat. No. 4,680,336, which is hereby incorporated by reference in its entirety. The preferred liquids are aqueous salt solutions, water, and deionized water. The most preferred liquids are aqueous salt solutions, particularly, borate buffered saline solution and deionized water. Processing aids may be added to the liquids including surfactants such as Tween, methylcellulose, hydroxypropylmethylcellulose, carboxycellulose and the like, antibacterial agents, such as silver nitrates, borates and the like.

As used herein "removing" refers to any method of moving packaging liquid from the sealing portion of the ophthalmic lens package, which includes but is not limited to applying a vacuum to (pulling air past), blowing compressed air at, the sealing portion. The preferred method of removing the liquid is by applying a vacuum to the sealing portion.

The invention is defined by the claims.

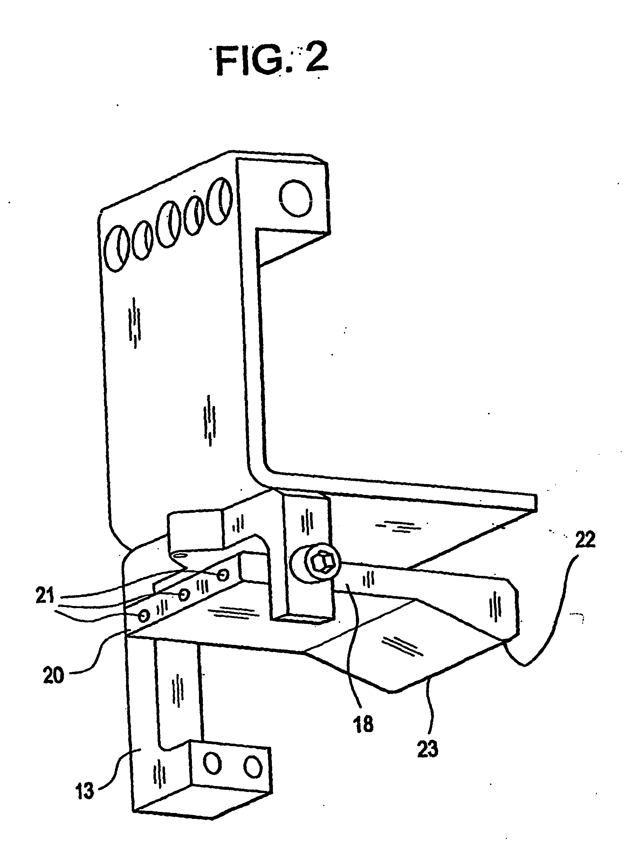

As used herein "means for applying a vacuum" include but are not limited to a vacuum pump. The preferred vacuum pump runs at a 4 to 8 cubic feet per minute (cfm). The amount of air that is pulled by the vacuum pump through each of second apertures **23**, can be calculated by known methods using the velocity of the vacuum pump, the diameter (or area) of the apertures. The most preferred vacuum pump is manufactured by a GAST, Model 1023. Referring to **Fig 2**, support, **13** is a removably mounted on a stationary structure of a ophthalmic lens manufacturing line (not shown). Member **17** is attached to support **13** at the third surface **18** and the fourth surface **19** (not shown). The first surface **20** of member **17** has three first apertures **21**. It is preferred that the diameter of each first apertures **21** is about 4.0 mm to about 5.9 mm, more preferably about 5 mm. It is preferred that the number of first apertures **21** vary, from at least one to about 5, most preferably about three. The second surface **22** has several second apertures **23**. It is preferred that the diameter of each said second apertures is about 0.75 mm to about 1.5 mm, more preferably about 1.0 mm. It is preferred that the number of second apertures **23** is about at least one to about at least 30, more preferably about 15 to about 25, most preferably about 20. Member **17** may be made from a variety of materials, including but not limited to derin, Teflon, aluminum, stanless steel, and chelated polyether ethyl ketone ("PEEK") It is preferred that member **17** is made from aluminum.

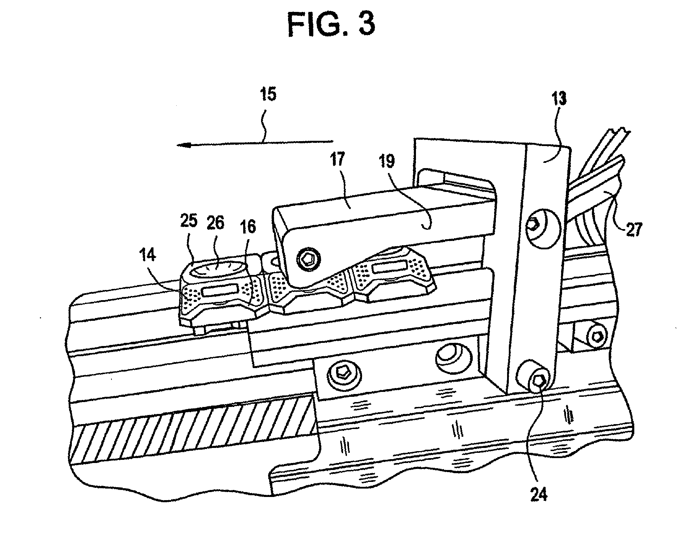

**Fig. 3** illustrates support, **13** removably mounted on a stationary structure of an ophthalmic lens manufacturing line via bolt **24**. The ophthalmic lens packages **14** move along rails in the direction of arrow **15**. Packages **14** contain an ophthalmic lens and a small amount of deionized water (not shown). Packages **14**, have a raised sealing portion **25** surrounding the cavity **26**. In the depicted embodiment packages **14** travel through the line in carriers **16**. Vacuum tubing **27** is attached to the first aperture **21** (not shown) and vacuum is applied using the vacuum pump. Member **17** is pivotally mounted to support **13** at the third surface **18** (not shown) and fourth surface **19** of member **17**. Member **17** is attached to support **13** at a height that allows the area of second surface **22** that surrounds second apertures **23** to contact or be no more that about 2 mm above the portion of the package that is to be heat sealed. More preferably this height is set to allow the area of second surface **22** to contact, or to be no more that about 0.5 mm above the portion of the package that is to be heat sealed. As depicted in **Fig. 3**, the area of second surface **22** (not shown) surrounding second apertures **23** (not shown) contacts sealing portion **25** as the package moves through the manufacturing line. When the vacuum pump is engaged, deionized water remaining on the sealing portion **25** from upstream processes is substantially removed when the apertured area of second surface **22** contacts sealing portion **25**.

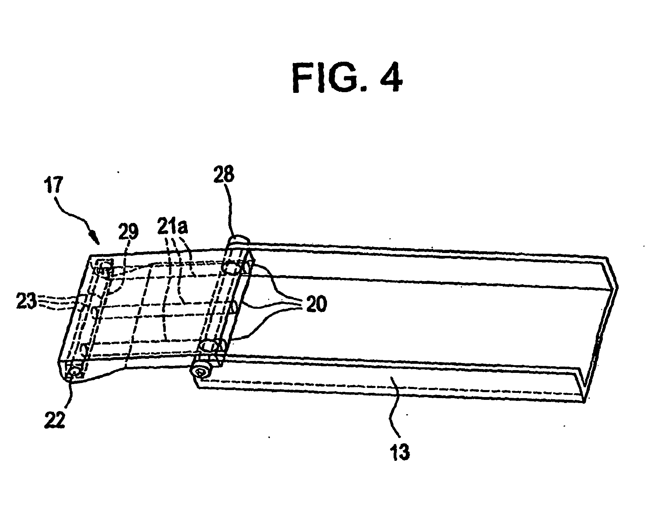

**Fig. 4** is a perspective drawing of member **17** pivotally attached to support 13 at bolts **28**. Three first apertures **21** extend from first surface **20** through member **17** and is shown in phantom by the dashed lines (- - -) **21a** Apertures **21a** extend though to a central channel **29**, shown in phantom by the dashed lines (- - -), is perpendicular to the apertures **21a** and connects all first apertures **21**. Central channel **29** extends though apertures **23** and terminates on second surface **22**. Preferably the each of apertures **21a** have a diameter of about 4.5mm to about 5.5, mm, more preferably about 5.1 mm. Preferably central channel **29**, has a diameter of about 5 mm to about 7 mm, more preferably about 6.7 mm

In order to illustrate the invention the following examples are included. These examples do not limit the invention. They are meant only to suggest a method of practicing the invention. Those knowledgeable in the production of lenses as well as other specialties may find other methods of practicing the invention. However, those methods are deemed to be within the scope of this invention.

### Example 1

Galifilcon A contact lenses were prepared substantially as described in example 49 U.S. Pat. No. 6,822,016. The lenses were hydrated and placed into blister packages, as illustrated in U.S. Pat. No. D458,023. 500 microliters of 50 ppm methyl cellulose in aqueous saline solution was added to each package and de-ionized water droplets were added to the sealing portion of the packages. An aluminum laminate foil consisting of aluminum sandwiched between layers of polyester printing materials and oriented polypropylene (materials used to seal Acuvue® Advance™ Brand Contact Lenses). The packages were heat sealed and examined for the presence of channels in the laminate foil. Of 411 packages produced, 354 packages contained channels (86.13%)

This experiment was repeated except that the filled packages were passed under a manifold containing holes on one end and connected to a vacuum device on the other end, which operates at 4 cfm. Packages passed under the manifold on their way to the heat sealing station and were sealed and examined for channels in the same manner as above. Of 1084 packages tested, zero packages contained channels (0.00%).

## Claims

1. Ophtalmic lens manufacturing line with an apparatus for removing packaging liquid from a sealing portion of an ophthalmic lens package, comprising
a means for applying a vacuum,
a support (13) mounted on the ophthalmic lens manufacturing line,
**characterised by**,
a member (17) pivotally attached to said support,
wherein said member comprises a first surface (20), and a second surface (22),
wherein said first surface comprises at least one first aperture (21), that extends through said member to at least one second aperture (23) located on said second surface,
wherein said at least one first aperture is removably attached to said means for applying a vacuum
wherein said manufacturing line comprises a means for moving said ophthalmic lens package through said manufacturing line
wherein said sealing portion of said ophthalmic lens package is no more than about 2 mm below an area of said second surface when said ophthalmic lens package moves through said manufacturing line.

2. The line of claim 1 wherein said area of said second surface surrounds said at least one second aperture.

3. The line of claim 1 wherein said sealing portion of said ophthalmic lens package contacts said area of said second surface when said ophthalmic lens package moves through said manufacturing line.

4. The line of claim 1 wherein said member further comprises a third surface (18) and a fourth surface (19) wherein said member is pivotally attached to said support on said third surface and said fourth surface.

5. The line of claim 1 comprising at least three first apertures.

6. The line of claim 1 comprising at least twenty second apertures

7. The line of claim 4 comprising at least three first apertures.

8. The line of claim 4 comprising at least twenty second apertures.

9. The line of claim 8 wherein each of said first apertures is about 5 mm.

10. The line of claim 9 wherein each of said second apertures is about 1 mm

11. The line of claim 1 wherein said member comprises aluminum.

## Patentansprüche

1. Produktionsstraße für ophthalmischen Linsen mit einer Vorrichtung zum Entfernen von Packungsflüssigkeit aus einem versiegelnden Abschnitt einer Packung mit ophthalmischen Linsen, umfassend:
ein Mittel zum Anlegen eines Unterdrucks,
einen Träger (13), der auf der Produktionsstraße für ophthalmischen Linsen montiert ist,
**gekennzeichnet durch**
ein Glied (17), das drehbar an dem Träger angebracht ist,
wobei das Glied eine erste Oberfläche (20) und eine zweite Oberfläche (22) umfasst,
wobei die erste Oberfläche mindestens eine erste Öffnung (21) umfasst, die sich **durch** das Glied zu mindestens einer zweiten Öffnung (23) erstreckt, die sich auf der zweiten Oberfläche befindet,
wobei die mindestens eine erste Öffnung entfernbar an dem Mittel zum Anlegen eines Unterdrucks angebracht ist,
wobei die Produktionsstraße ein Mittel umfasst zum Bewegen der Packung mit ophthalmischen Linsen **durch** die Produktionsstraße,
wobei der versiegelnde Abschnitt der Packung mit ophthalmischen Linsen höchstens etwa 2 mm unter einem Bereich der zweiten Oberfläche liegt, wenn sich die Packung mit ophthalmischen Linsen **durch** die Produktionsstraße bewegt.

2. Straße nach Anspruch 1, wobei der Bereich der zweiten Oberfläche die mindestens eine zweite Öffnung umgibt.

3. Straße nach Anspruch 1, wobei der versiegelnde Abschnitt der Packung mit ophthalmischen Linsen den Bereich der zweiten Oberfläche kontaktiert, wenn die Packung mit ophthalmischen Linsen sich durch die Produktionsstraße bewegt.

4. Straße nach Anspruch 1, wobei das Glied weiterhin eine dritte Oberfläche (18) und eine vierte Oberfläche (19) umfasst, wobei das Glied drehbar an dem Träger auf der dritten Oberfläche und der vierten Oberfläche angebracht ist.

5. Straße nach Anspruch 1, umfassend mindestens drei erste Öffnungen.

6. Straße nach Anspruch 1, umfassend mindestens 20 zweite Öffnungen.

7. Straße nach Anspruch 4, umfassend mindestens drei erste Öffnungen.

8. Straße nach Anspruch 4, umfassend mindestens 20 zweite Öffnungen.

9. Straße nach Anspruch 8, wobei jede der ersten Öffnungen etwa 5 mm beträgt.

10. Straße nach Anspruch 9, wobei jede der zweiten Öffnungen etwa 1 mm beträgt.

11. Straße nach Anspruch 1, wobei das Glied Aluminium umfasst.

## Revendications

1. Ligne de fabrication des lentilles ophtalmiques avec un appareil pour retirer le liquide de conditionnement d'une partie de scellement d'un emballage de lentille ophtalmique, comprenant :
un moyen pour appliquer un vide,
un support (13) monté sur la ligne de fabrication des lentilles ophtalmiques,
**caractérisée** pair :
un élément (17) fixé de façon pivotante audit support,
ledit élément comprenant une première surface (20) et une deuxième surface (22),
ladite première surface comprenant au moins une première ouverture (21) qui s'étend à travers ledit élément jusqu'au moins une deuxième ouverture (23) située sur ladite deuxième surface,
ladite au moins une première ouverture étant fixée de façon amovible audit moyen pour appliquer un vide,
ladite ligne de fabrication comprenant un moyen pour déplacer ledit emballage de lentille ophtalmique à travers ladite ligne de fabrication,
ladite partie de scellement dudit emballage de lentille ophtalmique ne se situant pas à plus d'environ 2 mm en dessous d'une zone de ladite deuxième surface quand ledit emballage de lentille ophtalmique se déplace à travers ladite ligne de fabrication.

2. Ligne selon la revendication 1 dans laquelle ladite zone de ladite deuxième surface entoure ladite au moins une deuxième ouverture.

3. Ligne selon la revendication 1 dans laquelle ladite partie de scellement dudit emballage de lentille ophtalmique touche ladite zone de ladite deuxième surface quand ledit emballage de lentille ophtalmique se déplace à travers ladite ligne de fabrication.

4. Ligne selon la revendication 1 dans laquelle ledit élément comprend en outre une troisième surface (18) et une quatrième surface (19), ledit élément étant fixé de façon pivotante audit support sur ladite troisième surface et ladite quatrième surface.

5. Ligne selon la revendication 1 comprenant au moins trois premières ouvertures.

6. Ligne selon la revendication 1 comprenant au moins vingt deuxièmes ouvertures.

7. Ligne selon la revendication 4 comprenant au moins trois premières ouvertures.

8. Ligne selon la revendication 4 comprenant au moins vingt deuxièmes ouvertures.

9. Ligne selon la revendication 8 dans laquelle chacune desdites premières ouvertures fait environ 5 mm.

10. Ligne selon la revendication 9 dans laquelle chacune desdites deuxièmes ouvertures fait environ 1 mm.

11. Ligne selon la revendication 1 dans laquelle ledit élément comprend de l'aluminium.
